# EUROPEAN PATENT SPECIFICATION

(11) **EP 0 470 180 B1**
(45) Date of publication and mention of the grant of the patent: **05.03.1997**
(21) Application number: 90907828.9
(22) Date of filing: 26.04.1990
(51) Int. Cl.: C08G 59/28

(54) **HYDROXY-FUNCTIONAL POLY(AMIDE ETHERS) AS THERMOPLASTIC BARRIER RESINS**
HYDROXY-FUNKTIONELLE POLY(AMID)ÄTHER ALS THERMOPLASTISCHE GRENZSCHICHTHARZE
POLY(AMIDE ETHER) HYDROXY-FONCTIONNELS UTILISES EN TANT QUE RESINE THERMOPLASTIQUE A EFFET BARRIERE

(30) Priority: 26.04.1989 US 344630
(43) Date of publication of application: 12.02.1992
(73) Proprietor: THE DOW CHEMICAL COMPANY, Midland Michigan 48640-1967 (US)
(72) Inventor: WHITE, Jerry, E., Midland, MI 48640 (US); BRENNAN, David, J., Midland, MI 48640 (US); PIKULIN, Steven, Hamden, CT 06514 (US)
(74) Representative: Raynor, John
(86) International application number: US9002312
(87) International publication number: WO9012828

(56) References cited:
- US-A- 3 477 990
- US-A- 3 637 590
- US-A- 3 948 855
- US-A- 4 367 328

## Description

This invention relates to thermoplastic polymers having pendant hydroxyl moieties and aromatic ether moieties and to articles prepared from such polymers.

Hydroxyphenoxyether polymers are known to be useful in the fabrication of articles exhibiting barrier properties. See, for example, Reinking et al, *J.Poly Sci.,* Vol. 7, pp. 2135-2144, pp. 2145-2152 and pp. 2153--2160 (1963) and *Encyclopedia of Polymer Science and Technology,* Vol. 10, pp. 111-122. Such polymers generally have only moderate oxygen barrier, i.e., they generally exhibit oxygen transmission rates of 2 or more and up to 75 cm³-mil/100 in²-atm-day (0,9-30 cm³/mm/m² - atm - day).

In view of the limited barrier properties of the prior art polymers having pendant hydroxyl moieties and phenoxyether moieties, it would be highly desirable to provide a polymer having a genuinely high barrier (i.e., oxygen transmission rate less than 5 cm³-mil/100in²-atm-day (2 cm³/mm/m² - atm - day) to oxygen in both dry and moist environments. Polymers that retain such high barrier in both dry and moist environments would be especially desirable.

US-A-3948855 discloses thermoplastic pherolic hydroxyethers containing amide moieties and pendant hydroxyl moieties.

US-A-3637590 discloses polyether resins for high impact applications, incorporating a dihydric polynuclear pherol.

The present invention provides a thermoplastic polymer which is solid at temperatures in the range of 15 to 35°C, and which has repeating units represented by the formula: 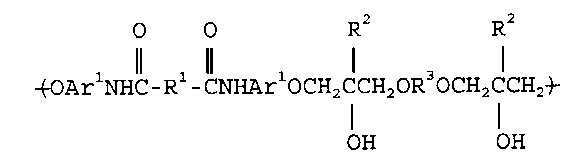 wherein each Ar¹ is independently a divalent aromatic moiety, each R¹ is a divalent radical of which at least 50 percent by weight is hydrocarbon each R² is independently a monovalent aliphatic moiety, and each R³ is independently is a divalent radical of which at least 50 percent by weight is hydrocarbon. Surprisingly, the polymer of this invention, hereinafter called a hydroxy-functional poly(amide-ether), exhibits thermoplastic character and excellent barrier to oxygen in both dry and moist environments. The polymer can be extruded, molded or fabricated by other heat plastifying methods to form a variety of articles such as films, bags and tubes as well as stand alone containers. Such polymers retain their thermoplasticity even after being subjected to such heat plastifying conditions. By "normally solid" it is meant that the polymer is solid at ambient temperatures, eg. 15 to 35°C.

In another aspect, this invention is a container suitable for packaging oxygen-sensitive materials wherein the container is fabricated of the hydroxy-functional poly(amide-ether). In yet a further aspect, this invention is a substantially impermeable film or coating of the polymer.

In addition to their use as barrier containers and films, the polymers of this invention are also useful as molding, extrusion and casting resins.

The hydroxy-functional poly(amide-ether) has repeating units represented by the formula: 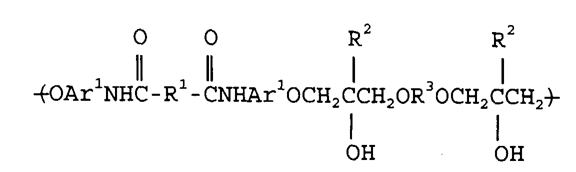 wherein each Ar¹ is independently a divalent aromatic moiety, each R¹ is a predominantly hydrocarbylene moiety, each R² is independently hydrogen or a monovalent aliphatic moiety, and each R³ is independently a predominantly hydrocarbylene moiety. In the more preferred polymers, the nitrogen atom of the amide moiety 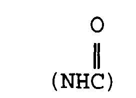 is bonded to an aromatic ring. "Predominantly hydrocarbylene" is defined as a divalent radical of which at least 50 percent by weight is hydrocarbon, but which optionally contains a minor amount of heteroatomic moiety such as oxygen, sulfur, imino, sulfonyl, sulfoxyl and the like.

The hydroxy-functional poly(amide-ethers) of this invention are more preferably those represented by the formula: 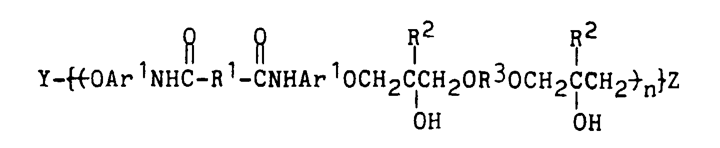 wherein Ar¹, R¹, R² and R³ are as defined before, Y is hydrogen or a monovalent organic terminating group, Z is a monovalent organic terminating group, and n is a whole number from 10 to 1000.

In the more preferred polymers, R¹ is a predominantly hydrocarbylene such as (1) alkylene which has from 1 to 10 carbons which may contain a heteroatomic moiety such oxygen, sulfur, sulfonyl or sulfoxyl and (2) arylene which has from 5 to 25 carbons, may contain a heteroatomic moiety and may be substituted with alkyl, alkoxy, halo, nitro or cycloalkyl groups. R² is hydrogen or a hydrocarbyl or substituted hydrocarbyl wherein hydrocarbyl is a monovalent hydrocarbon such as alkyl, cycloalkyl, aralkyl, or aryl and the substituent(s) is a monovalent moiety which is inert in the reactions used to prepare the hydroxy-functional poly(amide-ether). R³, while usually different from R¹, is similarly a predominantly hydrocarbylene moiety as previously defined. Ar¹ is arylene or substituted arylene wherein the substituent may be alkyl, alkoxy, halo, nitro or cyano. Y is hydrogen or 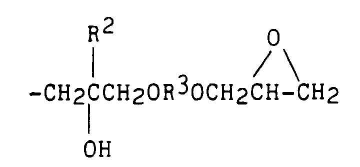 Z is 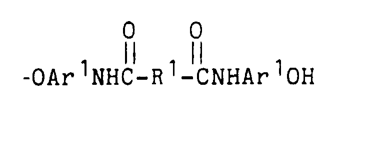 or 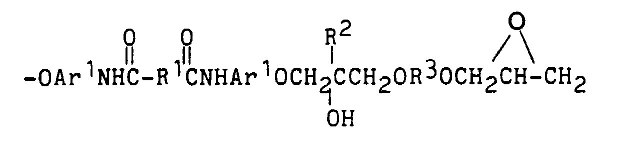 and n is a whole number from 10 to 1000.

In the most preferred hydroxy-functional poly(amide-ethers), R¹ is (1) alkylene having from 1 to 10 carbons such as n-butylene, n-pentylene, n-hexylene, n-octylene; (2) alkyleneoxyalkylene such as ethyleneoxyethylene; (3) alkylenethioalkylene such as ethylenethioethylene or alkylenesulfonylalkylene such as ethylenesulfonylethylene; (4) alkyleneoxyaryloxyalkylene such as ethyleneoxyphenoxyethylene; (5) alkylenearylalkylene such as methylenephenylmethylene; or (6) arylene such as phenylene or substituted arylene such as halophenylene. Of the R¹ groups, n-butylene is especially preferred. Most preferably, R² is hydrogen or alkyl having from 1 to 4 carbons such as methyl, ethyl, propyl and butyl, with hydrogen being especially preferred. R³ is most preferably arylene such as phenylene, biphenylene, or naphthenylene; bisphenylenealkylidene such as bisphenyleneisopropylidene, bisphenylenecyanomethane and bisphenylenemethane; bisphenyleneoxide; or bis-(phenyleneamido)alkane such as bis(phenyleneamido)butane, bisphenylene sulfide, bisphenylene sulfone, bisphenylene ketone and bisphenylene amide, with bisphenyleneisopropylidene being especially preferred. Ar¹ is most preferably phenylene or substituted phenylene wherein the substituent is alkyl, halo or nitro, with phenylene being especially preferred. In the most preferred resins, n is 100-400.

The hydroxy-functional poly(amide-ethers) are preferably prepared by contacting a N,N'-bis(hydroxyphenylamido)alkane or arene, hereinafter referred to as a dihydroxyl diamide, with a diepoxide under conditions sufficient to cause the hydroxyl moieties to react with epoxy moieties to form ether linkages, and pendant hydroxyl moieties. Surprisingly, the amide moieties do not react with the epoxy groups to form any significant cross-linkages. Conditions conventionally employed in the reaction of epoxides with phenols to form ether linkages are suitably employed in preparing the resins of this invention. In general, however, the process for preparation is carried out so that the unreacted epoxy groups in the finished polyether are minimized. By minimizing the epoxy groups in the polyether, the essential thermoplastic character of the polymer can be retained. Preferred conditions for preparing such resins are set forth in the following working examples.

The dihydroxyl diamide is prepared by contacting a suitable diacid or diacid halide with a substantial excess of an aminoarenol under conditions sufficient to cause reaction of the amine moieties with the acid halide moieties to form amide moieties. Examples of diacids and diacid halides that are suitably employed include acids and acid halides, preferably chlorides, of the following acids: oxalic, adipic, malonic, succinic, glutaric, fumaric, maleic, pimelic, suberic, azelaic, sebacic, terephthalic, and isophthalic. Examples of aminoarenols suitably employed include the following: aminophenols such as p-aminophenol and m-aminophenol, aminonaphthols and other aminohydroxyarenes. Conditions conventionally employed for the reaction of acid chlorides with amines to form amides are suitably employed to form the dihydroxyl diamides of this invention. Examples of such suitable conditions are set forth according to J. Preston, *J.Polym.Sci.,* Vol. 8, p. 3135-3144(1970). Preferred conditions for preparing the dihydroxyl diamides are set forth hereinafter in the working examples.

Examples of preferred diepoxides include the diglycidyl ethers of dihydric phenols such as 4,4'--isopropylidene bisphenol (Bisphenol A), 4,4'-dihydroxydiphenylethylmethane, 3,3'-dihydroxydiphenyldiethylmethane, 3,4'-dihydroxydiphenylmethylpropylmethane, bisphenol, 4,4'-dihydroxydiphenyloxide, 4,4'-dihydroxydiphenylcyanomethane, 4,4'-dihydroxybiphenyl, 4,4'-dihydroxybenzophenone, 4,4'-dihydroxydiphenyl sulfide, 4,4'-dihydroxydiphenyl sulfone, 2,6-dihydroxynaphthalene, 1,4'-dihydroxynaphthalene, hydroquinone, resorcinol, catechol and other dihydric phenols listed in US-A-4,438,254 and 4,480,082.

For the purposes of this invention, the term "barrier polymers" means that the polymer exhibits an oxygen transmission rate which is less than 5, preferably less than 1 and most preferably less than 0.5 cubic centimeters/mil/100 inch²/atmosphere/day (2, 0.4, and 0.2 cm³/mm/m² - atm - day respectively). Although a variety of factors such the chemical structure of the B-component and A-component and the ratio of A-component to B-component, can affect the barrier of the polymer. The barrier properties of the polymer can be significantly affected by the mole ratios of amide moieties to pendent hydroxyl moieties. Preferably this mole ratio of amide to hydroxyl is at least 1:10, more preferably at least 1:2 and most preferably about 1:1.

The barrier containers, films and coatings of this invention are fabricated from the poly(amide-ether) using conventional fabricating techniques for normally solid, thermoplastio polymers such as extrusion, compression molding, injection molding and similar fabrication techniques commonly employed to produce such articles.

The following working examples are given to illustrate the invention and should not be construed as limiting its scope. Unless otherwise indicated, all parts and percentages are by weight.

### Example 1

### A. Preparation of N,N'-Bis(m-hydroxyphenyl)adipamide

A solution of adipoyl chloride (5.5 g, 0.03 mole) in dry tetrahydrofuran (THF, 50 mL) is added dropwise to a magnetically stirred solution of m-aminophenol (13.0 g, 0.12 mole) in 150 ml of THF. A precipitate forms after 10-15 minutes and is collected by filtration and then washed with water and then with a mixture of water and tetrahydrofuran and recrystallized from an ethanol/water mixture. Analysis of the resulting 8.86 g of white solid indicates it to have the following structure:

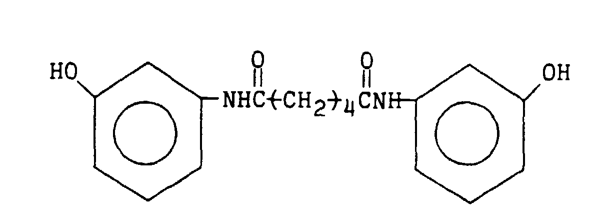

Several additional bis(hydroxyphenyl)amides are prepared using the foregoing procedure, m-aminophenol and different diacid chlorides. The resulting amides are then employed according to the following procedure to make the desired hydroxy-functional poly(amide-ethers). These polymers are then evaluated for barrier properties and the results are reported in Table I.

### B. Preparation of Hydroxy Poly(amide-ethers)

A 10.5-g (31.98 mmoles) portion of the adipamide of Part A and diglycidyl ether of Bisphenol A (DGBA) (11.26 g, 32.62 mmoles, epoxy equivalent weight of 172.58) in 13 mL of freshly distilled propylene glycol phenylether are heated with stirring to 140°C-150°C under a nitrogen atmosphere. The diglycidyl ether is recrystallized from methanol twice before use. About 15-20 drops of ethyltriphenylphosphonium acetate (70 percent in methanol) are added as the catalyst and, after a brief induction period, the temperature of the reaction rises to 160°C-170°C with complete dissolution of the monomers. Upon the resultant rapid increase in viscosity of the solution, additional catalyst and solvent are added to progress the reaction to completion and to maintain effective stirring. The reaction solution is maintained at 150°C-160°C for 20 minutes and then cooled to 100°C and diluted with 25 mL of dimethylformamide (DMF). The resulting solution is poured into a rapidly stirred 1:1 methanol/water mixture (400-600 mL) to precipitate the product which is then redissolved in DMF (50 mL) and reprecipitated from the methanol/water mixture. The product is dried *in vacuo* at 90°C for 48 hours to yield 15.1 g (70 percent yield) of a poly(amide-ether) (η inh = 0.65 dL/g in DMF at 25°C and 0.5 g/dL) which is represented by the formula:

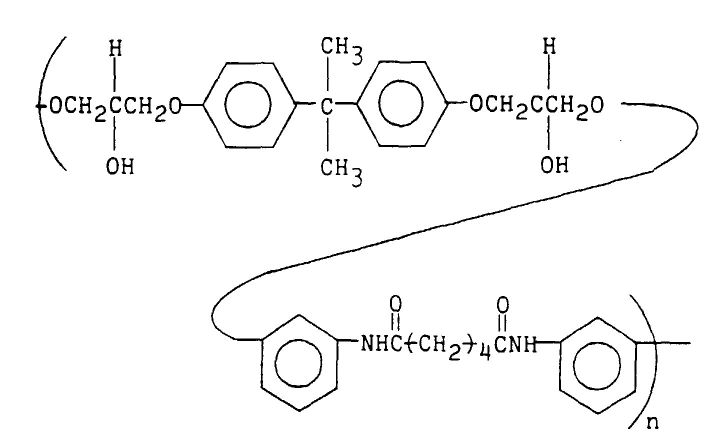

Several additional hydroxy-functional poly(amide-ethers) are prepared using the foregoing procedure and the dihydroxyamides and diepoxides corresponding to moieties shown for R¹, R³ and Ar¹ in Table I. These polymers are generally represented by the following structural formula: 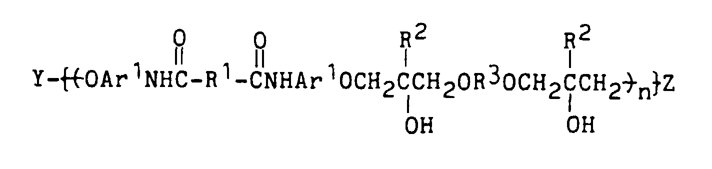 wherein Ar¹, R¹, and R³ are as defined in Table I, Y is hydrogen, Z is 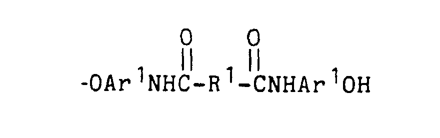 and n is in range of 200 to 400 and R² is hydrogen.

### C. Barrier Testing

Specimens (10 cm x 10 cm x 0.013 cm) for oxygen barrier evaluations are prepared by compression molding samples (3.5 g) of the polymer of Part B between Teflon sheets in a brass template at 200°C at 500 psi (3.5 mPa) for 8-10 minutes, then at 40,000 psi (275 mPa) for 2-4 minutes and then cooled at 40,000 psi for 10 minutes. Oxygen transmission rates are then measured for the samples and the results are reported in Table I.

Following the foregoing procedures, several other hydroxy-functional poly(amide-ethers) within the scope of this invention are similarly prepared and tested and the results are also recorded in Table I.

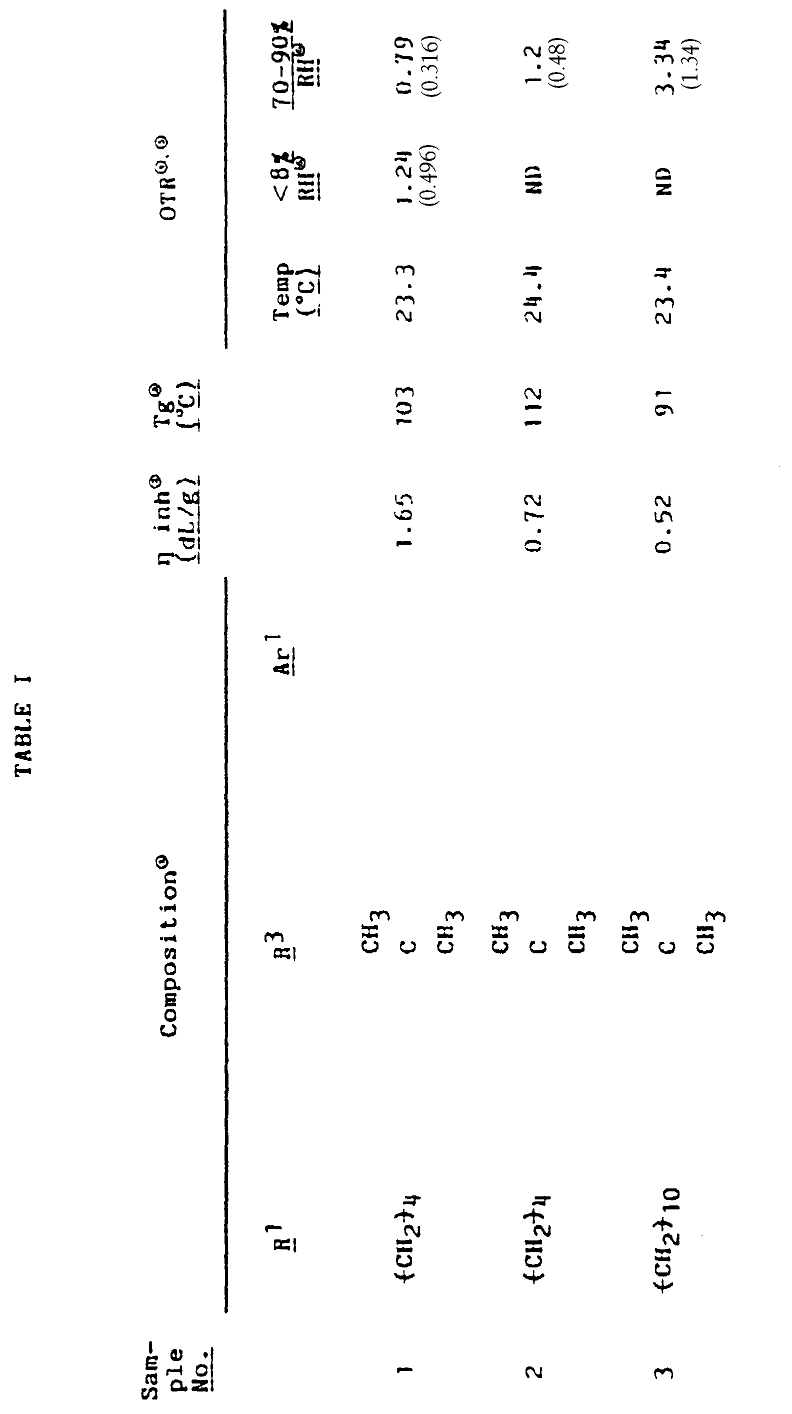

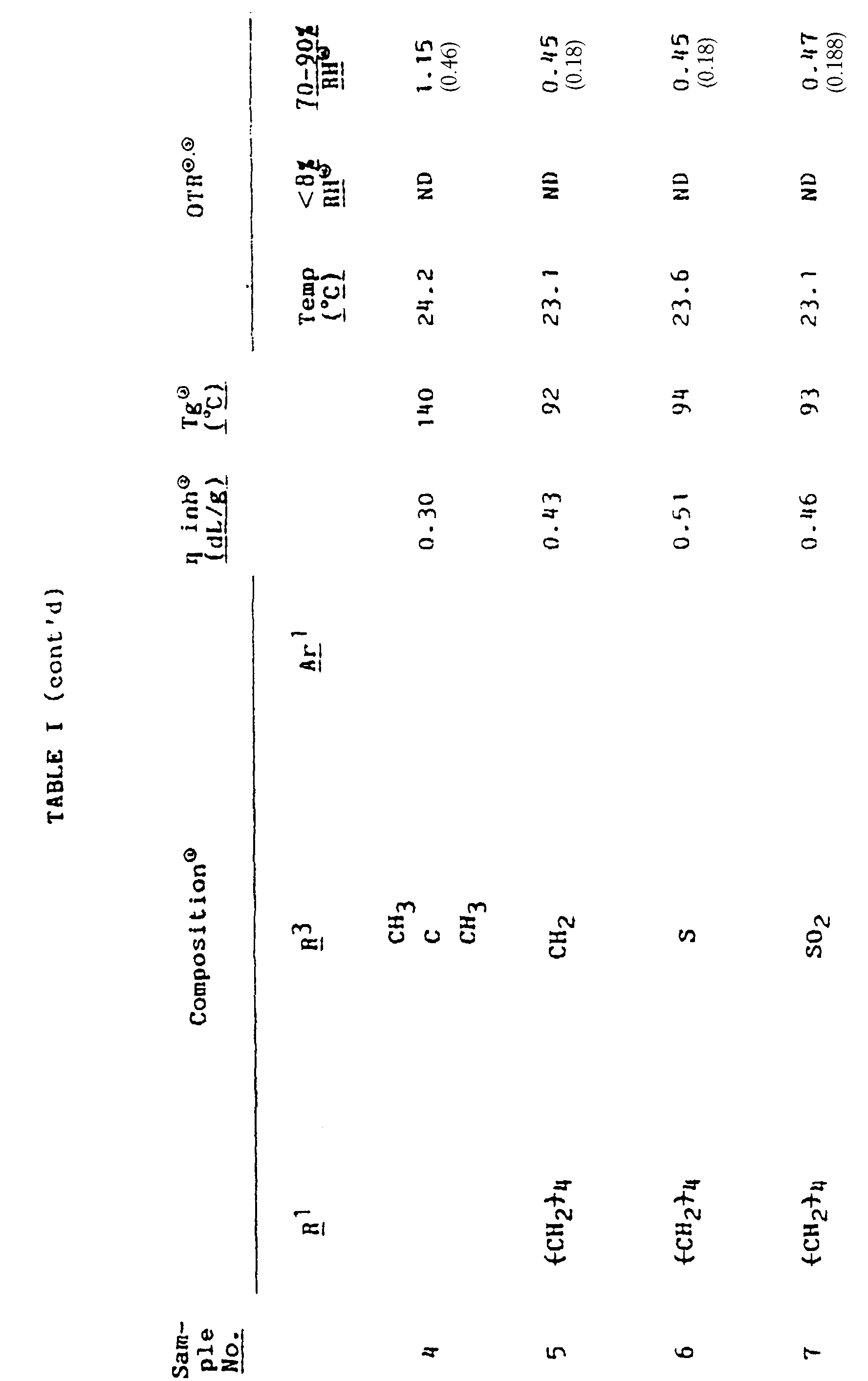

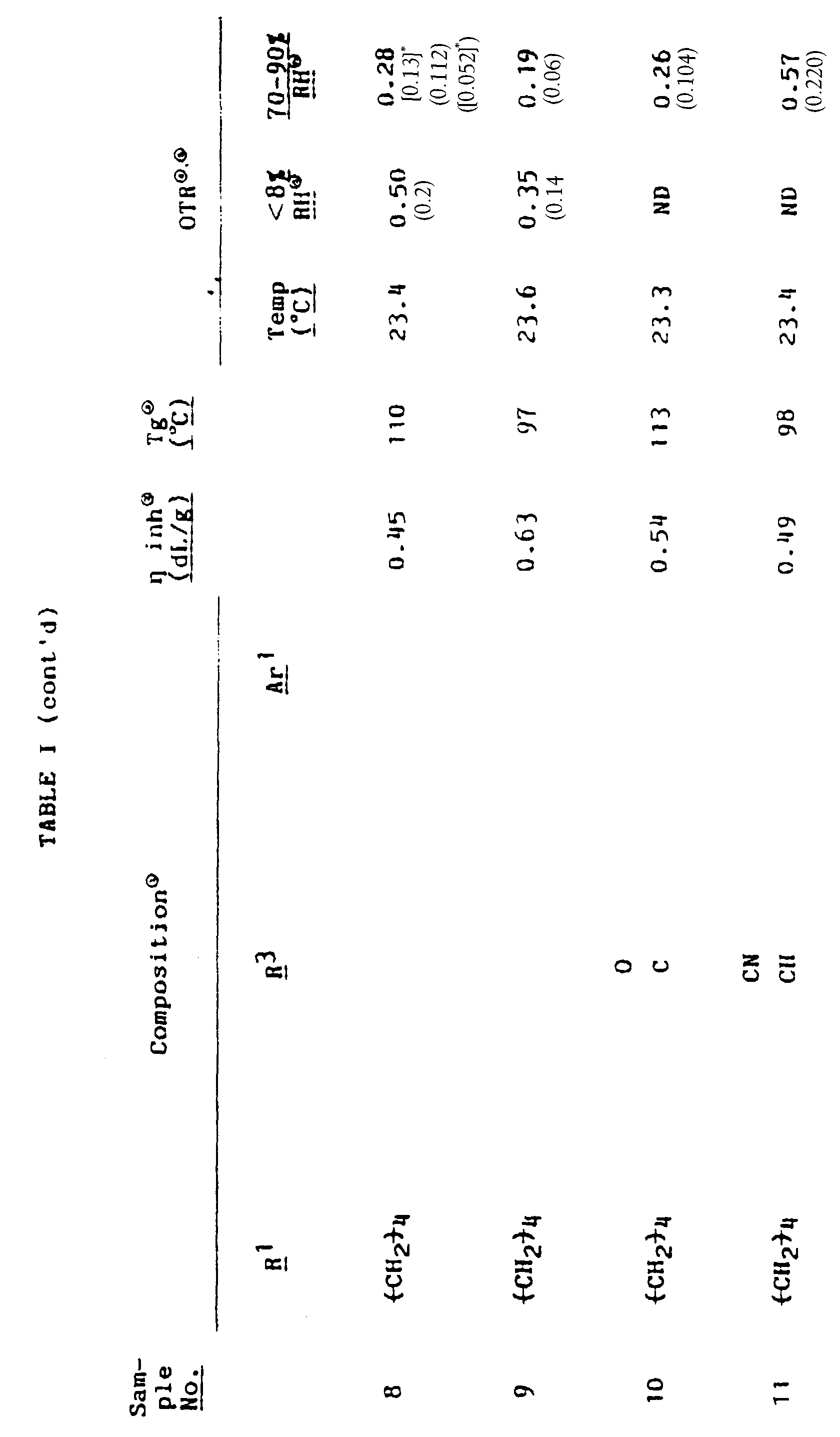

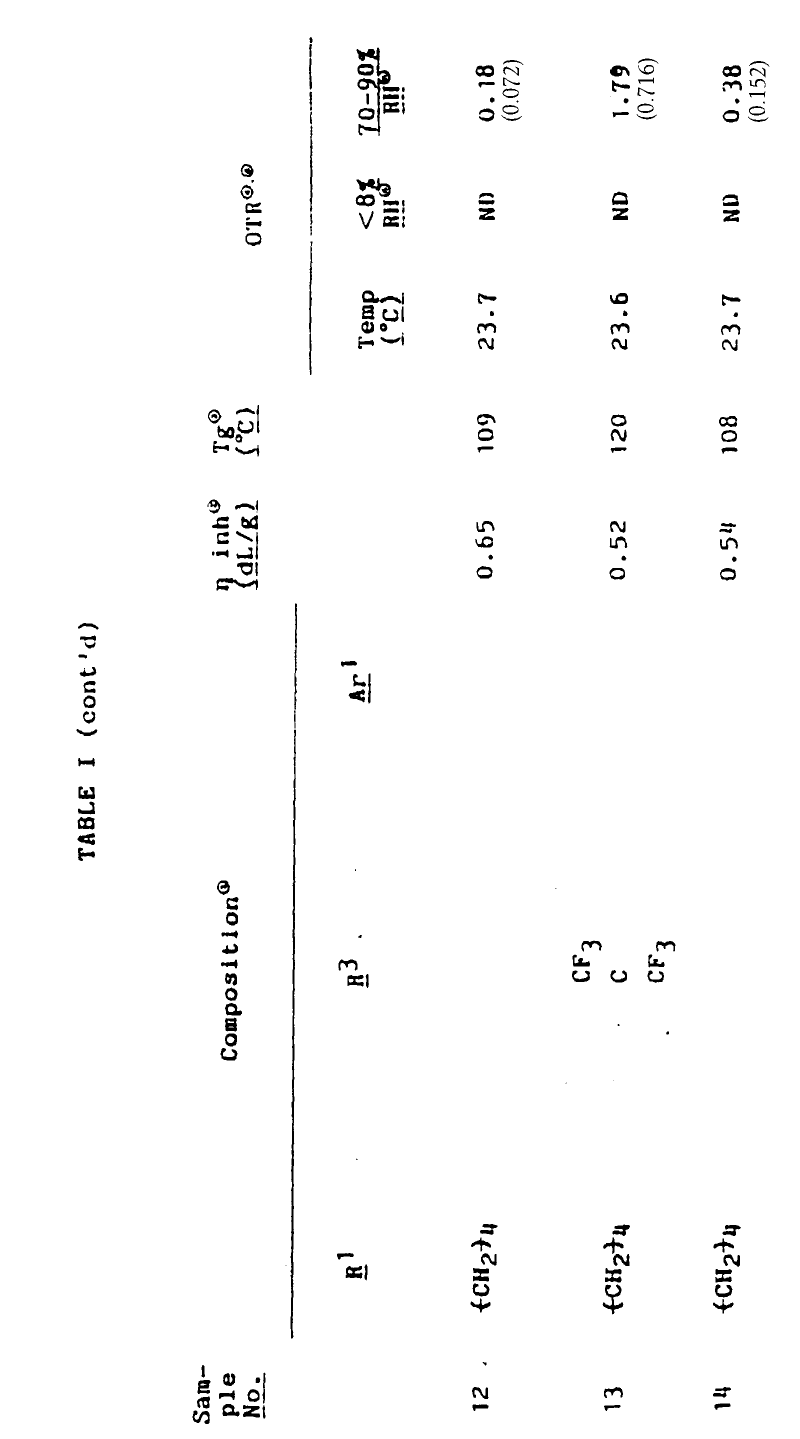

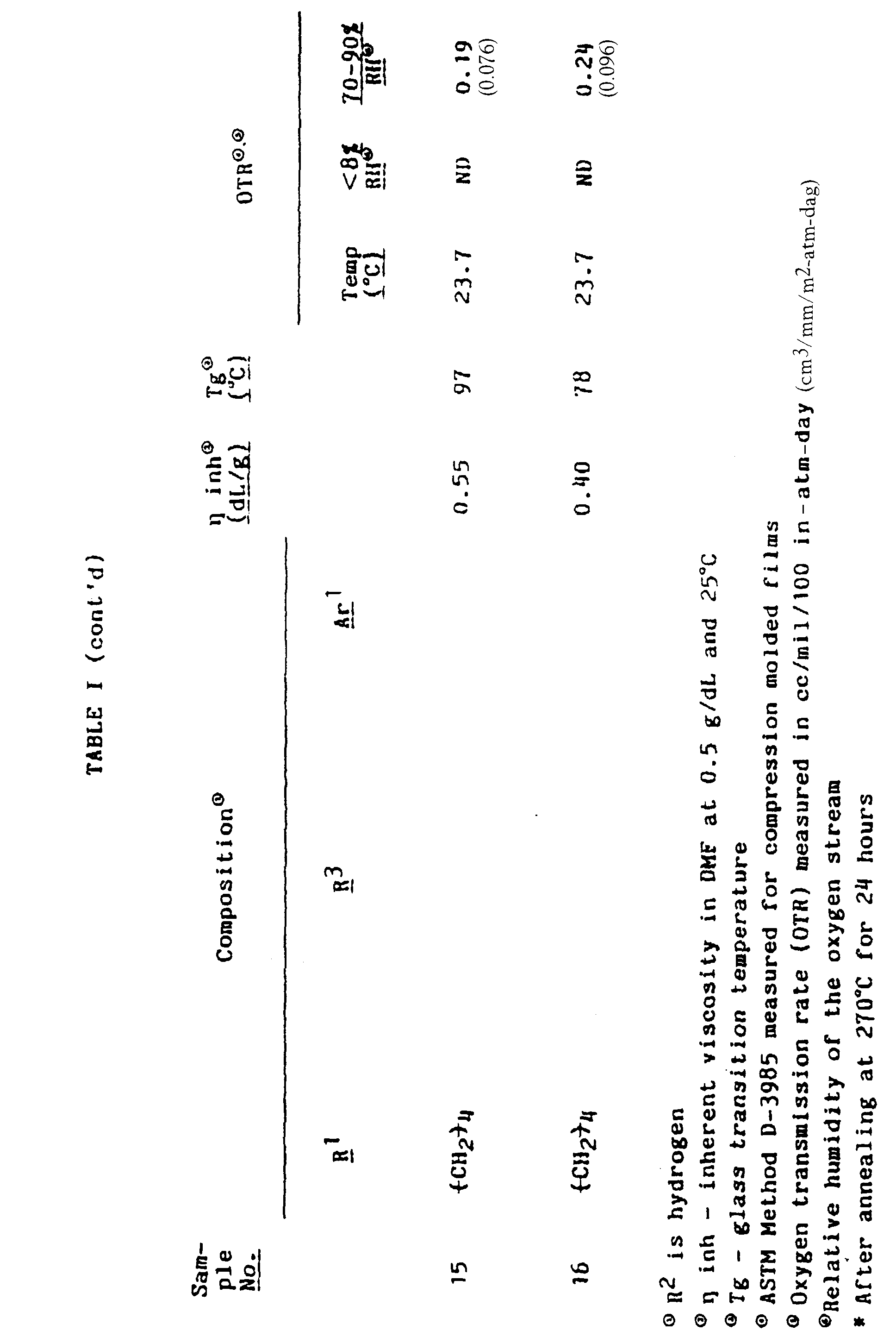

As evidenced by the data shown in Table I, the polymers of this invention exhibit excellent barrier to oxygen transmission in a wet environment as well as in a dry environment.

## Claims

1. A thermoplastic polymer which is solid at temperatures in the range of 15 to 35°C, and which has repeating units represented by the formula: 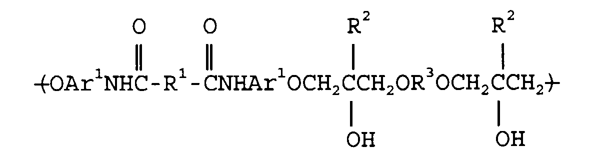 wherein each Ar¹ is independently a divalent aromatic moiety, each R¹ is a divalent radical of which at least 50 percent by weight is hydrocarbon, each R² is independently a monovalent aliphatic moiety, and each R³ is independently is a divalent radical of which at least 50 percent by weight is hydrocarbon.

2. A polymer as claimed in Claim 1, of the formula: 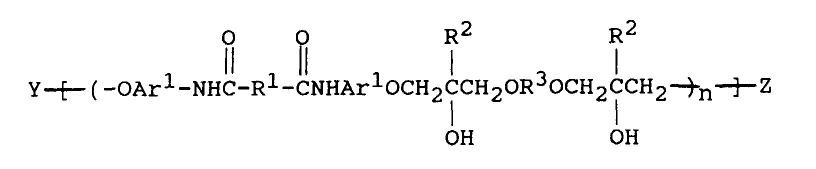 wherein each Ar^{1,} R¹, R² and R³ are as defined in Claim 1, Y is hydrogen or a monovalent organic terminating group, Z is a monovalent terminating group, and n is a whole number from 10 to 1000.

3. The polymer of Claim 2 wherein R¹ is (1) an alkylene moiety which has from 1 to 10 carbons or a heteroalkylene which contains an alkylene group and a heteroatomic moiety which is oxygen, sulfur, sulfonyl or sulfoxyl or (2) an arylene which has from 5 to 25 carbons and which optionally contains a heteroaromatic moiety and which may optionally be substituted with alkyl, alkoxy, halo, nitro or cyano, R² is hydrogen or a hydrocarbyl or substituted hydrocarbyl wherein the substituent(s) is a monovalent moiety which is inert in the reactions used to prepare the polymer, and R³ is (1) an alkylene which has from 1 to 10 carbons or a heteroalkylene which contains an alkylene group and a heteroatomic moiety which is oxygen, sulfur, sulfonyl or sulfoxyl or (2) an arylene which has from 5 to 25 carbons or heteroarylene which contains an arylene ring wherein the ring is interrupted with said heteroatomic moiety, Ar¹ is arylene or substituted arylene wherein the substituent is alkyl, alkoxy, halo, nitro or cyano, Y is hydrogen or 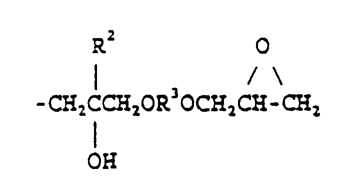 and Z is 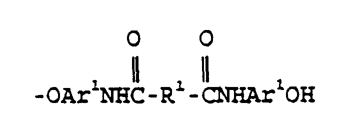 or

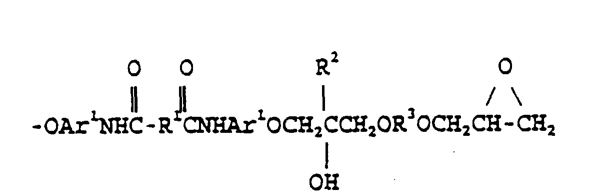

4. The polymer of Claim 3 wherein R¹ is n-butylene, R² is hydrogen, R¹ is bisphenyleneisopropylidene, Ar¹ is phenylene, Y is hydrogen, and n is a number from 100 to 400.

5. A barrier container formed of a polymer as claimed in any one of Claims 1 to 4.

6. A barrier film formed of a polymer as claimed in any one of Claims to 1 to 4.

7. A process for preparing the polymer of any one Claims 1 to 4 which comprises contacting a N,N'-bis(hydroxyarylamido)hydrocarbylene with a diepoxide under conditions sufficient to cause hydroxyl groups to react with epoxy groups and thereby form the polymer.

## Patentansprüche

1. Thermoplastisches Polymeres, das bei Temperaturen im Bereich von 15 bis 35° C fest ist und das sich wiederholende Einheiten besitzt, die durch die Formel wiedergegeben werden: 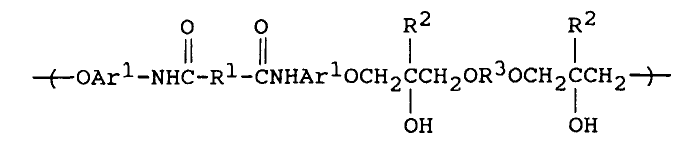 worin jedes Ar¹ unabhängig eine zweiwertige aromatische Einheit ist, jedes R¹ ein zweiwertiger Rest ist, von dem wenigstens 50 Gew.-% Kohlenwasserstoff ist, jedes R² unabhängig eine einwertige aliphatische Einheit ist, und jedes R³ unabhängig ein zweiwertiger Rest ist, von dem wenigstens 50 Gew.-% Kohlenwasserstoff ist.

2. Polymeres nach Anspruch 1 der Formel: 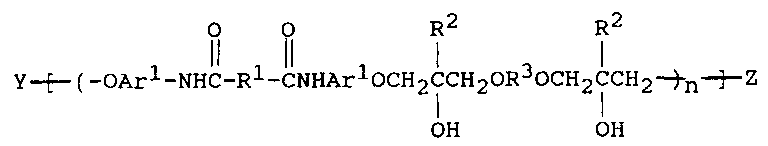 worin jedes Ar¹, R¹, R² und R³ wie in Anspruch 1 definiert sind, Y Wasserstoff oder eine einwertige organische Abschlußgruppe ist, Z eine einwertige Abschlußgruppe ist, und n eine ganze Zahl von 10 bis 1000 ist.

3. Polymeres nach Anspruch 2, worin R¹ ist: (1) eine Alkyleneinheit, die von 1 bis 10 Kohlenstoffe hat, oder ein Heteroalkylen, das eine Alkylengruppe und eine Heteroatomeinheit, die Sauerstoff, Schwefel, Sulfonyl oder Sulfoxyl ist, enthält, oder (2) ein Arylen, das von 5 bis 25 Kohlenstoffe hat und das wahlweise eine Heteroatomeinheit enthält und das wahlweise mit Alkyl, Alkoxy, Halogen, Nitro oder Cyano substituiert sein kann, R² Wasserstoff oder ein Hydrocarbyl oder substituiertes Hydrocarbyl ist, worin der/die Substituent/en eine bei den zur Herstellung des Polymeren angewandten Bedingungen inerte, einwertige Einheit ist, und R³ ist: ein Alkylen, das von 1 bis 10 Kohlenstoffe hat, oder ein Heteroalkylen, das eine Alkylengruppe und eine Heteroatomeinheit, die Sauerstoff, Schwefel, Sulfonyl oder Sulfoxyl ist, enthält, oder (2) ein Arylen, das von 5 bis 25 Kohlenstoffe hat, oder Heteroarylen, das einen Arylenring enthält, worin der Ring durch diese Heteroatomeinheit unterbrochen ist, Ar¹ Arylen oder substituiertes Arylen ist, worin der Substituent Alkyl, Alkoxy, Halogen, Nitro oder Cyano ist, Y Wasserstoff oder 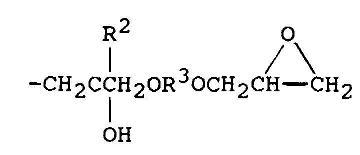 ist, und Z 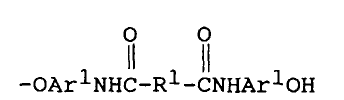 oder 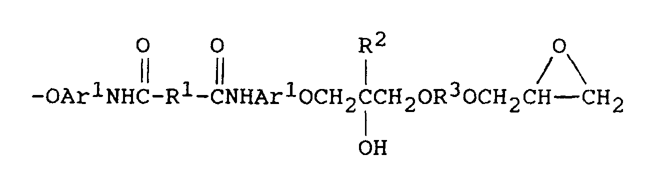 ist.

4. Polymeres nach Anspruch 3, worin R¹ n-Butylen ist, R² Wasserstoff ist, R³ Bisphenylenisopropyliden ist, Ar¹ Phenlyen ist, Y Wasserstoff ist und n eine ganze Zahl von 100 bis 400 ist.

5. Sperrschichtbehälter, geformt aus einem Polymeren wie in einem der Ansprüche 1 bis 4 beansprucht.

6. Sperrschichtfolie, geformt aus einem Polymeren wie in einem der Ansprüche 1 bis 4 beansprucht.

7. Verfahren zur Herstellung des Polymeren nach einem der Ansprüche 1 bis 4, welches umfaßt das Inkontaktbringen eines N,N'-Bis-(hydroxyarylamido)-hydrocarbylens mit einem Diepoxid unter ausreichenden Bedingungen, um die Reaktion von Hydroxylgruppen mit Epoxygruppen und dadurch Bildung des Polymeren herbeizuführen.

## Revendications

1. Polymère thermoplastique qui est solide aux températures situées dans l'intervalle allant de 15°C à 35°C et qui comporte des motifs répétés de formule 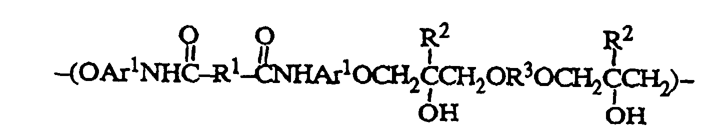 dans laquelle chaque Ar¹ représente indépendamment un groupe aromatique divalent, chaque R¹ représente un groupe divalent, hydrocarboné pour au moins 50 % en poids, chaque R² représente indépendamment un groupe aliphatique monovalent, et chaque R³ représente indépendamment un groupe divalent, hydrocarboné pour au moins 50 % en poids.

2. Polymère conforme à la revendication 1, de formule 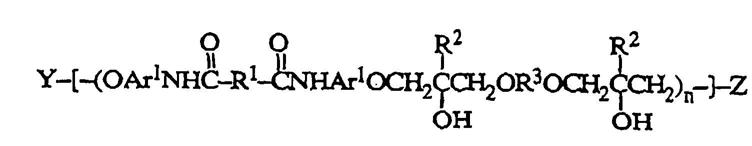 dans laquelle chacun des symboles Ar¹, R¹, R² et R³ a la définition indiquée dans la revendication 1, Y représente un atome d'hydrogène ou un groupe organique monovalent de terminaison, Z représente un groupe monovalent de terminaison, et n représente un nombre enticr qui vaut de 10 à 1000.

3. Polymère conforme à la revendication 2, dans lequel R¹ représente
1) un groupe alkylène comportant de 1 à 10 atomes de carbone, ou un groupe hétéroalkylène comportant un groupe alkylène et un maillon hétéroatomique qui est un atome d'oxygène ou dc soufre ou un groupe sulfonyle ou sulfoxyle, ou bien
2) un groupe arylène comportant de 5 à 25 atomes de carbone, qui contient éventuellement un maillon hétéroatomique et qui peut éventuellement porter un ou des substituants alkyle, alcoxy, halogéno, nitro ou cyano,
R² représente un atome d'hydrogène ou un groupe hydrocarbyle portant ou non, en tant que substituants, un ou des groupes monovalents qui restent inertes au cours des réactions mises en oeuvre pour préparer le polymère,
R³ représente
1) un groupe alkylène comportant de 1 à 10 atomes de carbone, ou un groupe hétéroalkylène comportant un groupe alkylène et un maillon hétéroatomique qui est un atome d'oxygène ou de soufre ou un groupe sulfonyle ou sulfoxyle, ou bien
2) un groupe arylène comportant de 5 à 25 atomes de carbone, ou un groupe hétéroarylène comportant un cycle arylène interrompu par l'un desdits maillons hétéroatomiques,
Ar¹ représente un groupe arylène portant ou non un ou des substituants alkyle, alcoxy, halogéno, nitro ou cyano,
Y représente un atome d'hydrogène ou un groupe de formule 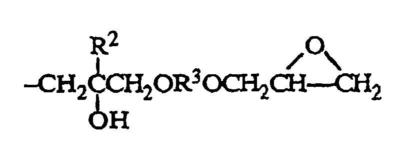
et Z représente un groupe de formule 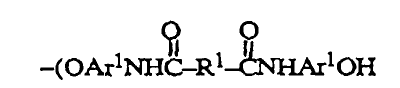 ou

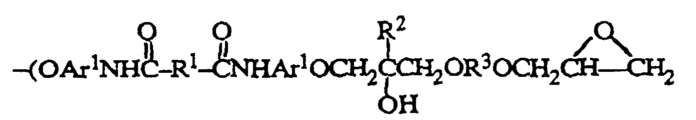

4. Polymère conforme à la revendication 3, dans lequel R¹ représente un groupe n-butylène, R² représente un atome d'hydrogène, R³ représente un groupe bis(phénylène)isopropylidène, Ar¹ représente un groupe phénylène, Y représente un atome d'hydrogène, et n représente un nombre valant de 100 à 400.

5. Récipient à propriétés de barrière, formé d'un polymère conforme à l'une des revendications 1 à 4.

6. Film à propriétés de barrière, formé d'un polymère conforme à l'une des revendications 1 à 4.

7. Procédé de préparation d'un polymère conforme à l'une des revendications 1 à 4, qui comporte le fait de mettre un N,N'-bis(hydroxyarylamido)hydrocarbylène en contact avec un diépoxyde, dans des conditions suffisantes pour que les groupes hydroxyles réagissent avec les groupes époxy et forment ainsi le polymère.
